# DEMANDE DE BREVET EUROPEEN

(11) **EP 1 705 868 A2**
(43) Date de publication de la demande: **27.09.2006**
(21) Numéro de dépôt: 06356031.2
(22) Date de dépôt: 21.03.2006
(51) Int. Cl.: H04L 29/06

(54) **Procédé et système de partage d'attributs personnels**

(30) Priorité: 22.03.2005 FR 0502807
(71) Demandeur: France Telecom S.A., 75015 Paris (FR)
(72) Inventeur: Boutroux, Anne, 14880 Hermanville Sur Mer (FR); Goutard, Cédric, 14440 Douvres La Delivrande (FR); Sahnoun, Rym, 94240 L'Hay Les Roses (FR)
(74) Mandataire: Colombo, Michel

(57) **Abrégé**

Dans ce procédé de partage d'attributs personnels d'un utilisateur entre plusieurs fournisseurs de services en ligne, un serveur Proxy d'un fournisseur d'accès Internet placé en coupure de flux entre le terminal et la toile d'araignée mondiale, intercepte (en 112) une requête de demande d'attributs adressée à un terminal d'utilisateur et la redirige automatiquement vers un module de choix de fournisseur d'attributs personnels. Le fournisseur d'accès Internet est celui qui a affecté dynamiquement une adresse Internet au terminal pour qu'il puisse naviguer sur la toile d'araignée mondiale.

## Description

La présente invention concerne un procédé et un système de partage d'attributs personnels, un fournisseur d'accès Internet, un serveur Proxy et un fournisseur de services pour ce procédé.

Ici, le terme « service » désigne un ensemble de tâches ou de fonctions réalisées par un serveur multimédia. Ces fonctionnalités sont, par exemple, le déclenchement de la livraison d'informations sur le terminal multimédia de l'utilisateur ou de la livraison d'un produit chez l'utilisateur du terminal multimédia.

Ici, l'expression « attributs personnels de l'utilisateur » désigne tout type d'informations relatives à l'utilisateur, telles que, par exemple, des données personnelles, un porte monnaie électronique, des données de géolocalisation, ou encore un agenda électronique contenant l'emploi du temps de l'utilisateur.

De tels procédés de partage d'attributs personnels ont, par exemple, été proposés par le consortium d'entreprise appelé « Liberty Alliance » dont le but est le développement des transactions sur Internet. Ces recommandations peuvent, par exemple, être obtenues à partir du site Internet http://www.projectliberty.org.

Les procédés de partage d'attributs s'opposent aux procédés employés aujourd'hui dans lesquels les attributs nécessaires à la personnalisation d'un service sont stockés sur les terminaux des utilisateurs dans des « cookies ». En effet, dans ce dernier cas, chaque cookies est propre à un fournisseur de services, de sorte qu'il existe autant de cookies enregistrés sur le terminal, que de fournisseurs de services déjà contactés. Avec l'utilisation de tels cookies, il n'est pas possible de partager les attributs personnels d'un même utilisateur entre plusieurs fournisseurs de services.

Dans l'un des procédés proposés par le consortium d'entreprise « Liberty Alliance » :
c) un module de choix sélectionne automatiquement un fournisseur électronique d'attributs parmi plusieurs fournisseurs d'attributs possibles en fonction d'un identifiant de l'utilisateur, chaque fournisseur d'attributs étant adapté pour fournir des attributs personnels d'utilisateurs préenregistrés,
d) en réponse à une requête de demande d'attributs personnels, émise par l'un quelconque des fournisseurs de services, le fournisseur d'attributs sélectionné par le module de choix est interrogé pour obtenir les attributs personnels requis par le fournisseur de services,
e) les attributs obtenus, lors de l'étape d), sont transmis au fournisseur de services, et
f) le fournisseur de services personnalise le service rendu à l'utilisateur en fonction des attributs transmis,

Ce procédé suppose que chaque fournisseur de services connaisse, pour un utilisateur donné, l'adresse du module de choix pour pouvoir lui adresser la requête de demande d'attributs. Ceci est un inconvénient.

L'invention vise à remédier à cet inconvénient en proposant un procédé de partage d'attributs personnels dans lequel le fournisseur de services n'a pas besoin de connaître l'adresse du module de choix.

L'invention a donc pour objet un procédé de partage d'attributs personnels d'un utilisateur entre plusieurs fournisseurs de services dans lequel avant les étapes c) à f) :
a) le fournisseur de services contacté par l'utilisateur envoie la requête de demande d'attributs personnels au terminal de l'utilisateur par l'intermédiaire de la toile d'araignée mondiale puis,
b) un serveur Proxy d'un fournisseur d'accès Internet placé en coupure de flux entre le terminal et la toile d'araignée mondiale, intercepte la requête de demande d'attributs adressée au terminal et la redirige automatiquement vers le module de choix, le fournisseur d'accès Internet étant celui qui a affecté dynamiquement une adresse Internet au terminal pour qu'il puisse naviguer sur la toile d'araignée mondiale.

Dans le procédé ci-dessus, il n'est pas nécessaire que chaque fournisseur de services connaisse l'adresse du module de choix ou toute autre adresse spécifique à la mise en oeuvre d'un procédé de partage d'attributs personnels. En effet, ici, toute requête de demande d'attributs émise par un fournisseur de services quelconque vers un terminal quelconque d'utilisateur est interceptée et redirigée automatiquement vers le module de choix par le serveur Proxy du fournisseur d'accès Internet placé en coupure de flux. Ceci simplifie la réalisation de fournisseurs de services aptes à être mis en oeuvre dans un procédé de partage d'attributs personnels.

De plus, il n'est pas nécessaire de prévoir dans chaque fournisseur de services une interface spécifique pour pouvoir communiquer avec et gérer directement le module de choix.

Les modes de réalisation de ce procédé peuvent comporter une ou plusieurs des caractéristiques suivantes :
- lors de l'étape b) :
   . le serveur Proxy redirige d'abord la requête de demande d'attributs vers un module de partage commun à l'ensemble des fournisseurs de services, puis
   . le module de partage interroge le module de choix à la place du fournisseur de services ayant émis la requête de demande d'attributs personnels ;
- avant l'étape a) :
   . un module d'insertion modifie automatiquement une requête de connexion du terminal au fournisseur de services pour y insérer un item indiquant qu'un procédé de partage d'attributs est susceptible d'être mis en oeuvre, la requête de connexion modifiée étant ensuite transmise au fournisseur de services, et
   . en réponse à cette requête de connexion modifiée, le fournisseur de services procède automatiquement à l'étape a) ;
- les fournisseurs d'attributs interrogés sont uniquement implémentés dans des serveurs respectifs de fourniture d'attributs indépendants des terminaux d'utilisateur et raccordés au module de choix par un réseau local interne au fournisseur d'accès Internet ou par la toile d'araignée mondiale, lors de l'étape d), le fournisseur d'attributs sélectionné est interrogé par un module de partage implémenté dans un serveur du fournisseur d'accès Internet, et lors de l'étape e), ce module de partage transmet les attributs obtenus au fournisseur de services par l'intermédiaire de la toile d'araignée mondiale ;
- le fournisseur d'attributs sélectionné est implémenté dans un terminal d'utilisateur, et lors de l'étape d), un module de partage interroge ce fournisseur d'attributs en insérant une requête d'interrogation dans un flux d'informations établi entre ce terminal et le fournisseur de services en utilisant, à cet effet, le serveur Proxy, et lors de l'étape e), un module de terminal intercepte la réponse du fournisseur d'attributs dans le flux d'informations établi entre le terminal et le fournisseur de services en utilisant le serveur Proxy et transmet la réponse interceptée au fournisseur de services.

Ces modes de réalisation du procédé de partage d'attributs présentent en outre les avantages suivants :
- le module de partage est commun à l'ensemble des fournisseurs de services et forme l'interface spécifique avec le module de choix de sorte qu'il n'est pas nécessaire d'implémenter une telle interface spécifique dans chaque fournisseur de services ;
- l'utilisation d'un module d'insertion permet de déclencher automatiquement la mise en oeuvre du procédé de partage d'attributs ;
- l'utilisation d'un module de partage implémenté sur un serveur du fournisseur d'accès Internet permet d'éviter que les attributs personnels ne transitent entre le terminal d'utilisateur et le fournisseur d'accès Internet, ce qui accroît la sécurité du procédé ; et
- l'insertion de requêtes d'interrogation destinées au terminal d'utilisateur dans un flux d'informations établi entre ce terminal et le fournisseur de services permet d'interroger simplement un terminal dont l'adresse est dynamiquement affectée par le fournisseur d'accès Internet lors de chaque connexion de ce terminal.

L'invention a également pour objet un système de partage d'attributs personnels entre plusieurs fournisseurs de services, ce système comportant :
- un module de choix apte à sélectionner un fournisseur électronique d'attributs parmi plusieurs fournisseurs d'attributs possibles en fonction d'un identifiant de l'utilisateur,
- plusieurs fournisseurs d'attributs aptes chacun à fournir des attributs personnels d'utilisateurs préenregistrés en réponse à une requête de demande d'attributs personnels émise par l'un quelconque des fournisseurs de services,
- des fournisseurs de services aptes à personnaliser le service rendu à l'utilisateur en fonction des attributs personnels transmis, et
- un fournisseur d'accès Internet apte à affecter dynamiquement une adresse Internet au terminal d'utilisateur pour qu'il puisse naviguer sur la toile d'araignée mondiale, ce fournisseur d'accès Internet comportant un serveur Proxy placé en coupure de flux entre le terminal d'utilisateur et la toile d'araignée mondiale,
dans lequel :
- les fournisseurs de services sont aptes à envoyer la requête de demande d'attributs personnels au terminal de l'utilisateur par l'intermédiaire de la toile d'araignée mondiale, et
- le serveur Proxy est apte à intercepter la requête de demande d'attributs adressée au terminal et à la rediriger automatiquement vers le module de choix.

L'invention a également pour objet un fournisseur d'accès Internet apte à être mis en oeuvre dans le procédé de fourniture d'attributs ci-dessus, ce fournisseur d'accès Internet étant apte à affecter dynamiquement une adresse Internet au terminal d'utilisateur pour qu'il puisse naviguer sur la toile d'araignée mondiale, ce fournisseur d'accès Internet comportant un serveur Proxy placé en coupure de flux entre le terminal d'utilisateur et la toile d'araignée mondiale, le serveur Proxy est apte à intercepter la requête de demande d'attributs adressée au terminal et à la rediriger automatiquement vers le module de choix.

L'invention a également pour objet un module de partage apte à être mis en oeuvre dans le procédé de partage d'attributs, ce module de partage étant apte :
. à interroger le module de choix à la place du fournisseur de services ayant émis la requête de demande d'attributs personnels,
. à interroger le fournisseur d'attributs sélectionné par le module de choix pour obtenir les attributs personnels requis, et
. à transmettre les attributs obtenus au fournisseur de services par l'intermédiaire de la toile d'araignée mondiale ;

L'invention a également pour objet un module d'insertion apte à modifier automatiquement une requête de connexion du terminal au fournisseur de services pour y insérer un item indiquant qu'un procédé de partage d'attributs est susceptible d'être mis en oeuvre, la requête de connexion modifiée étant ensuite transmise au fournisseur de services.

L'invention a également pour objet un module de terminal apte à être mis en oeuvre dans le procédé de partage d'attributs. Ce module de terminal est apte à intercepter la réponse du fournisseur d'attributs dans le flux d'informations établi entre le terminal et le fournisseur de services en utilisant le serveur Proxy et à transmettre la réponse interceptée au fournisseur de services.

L'invention a également pour objet un serveur Proxy et un fournisseur de services aptes à être mis en oeuvre dans le procédé de partage d'attributs ci-dessus.

Enfin, l'invention a pour objet un programme d'ordinateur apte à être mis en oeuvre dans un module de partage, caractérisé en ce qu'il comporte des instructions pour la mise en oeuvre des étapes d) et e) d'un procédé de partage d'attributs personnels conforme à l'une quelconque des revendications 4 ou 5 ci-annexées, lorsque ces instructions sont exécutées par le module de partage.

L'invention sera mieux comprise à la lecture de la description qui va suivre, donnée uniquement à titre d'exemple et faite en se référant aux dessins sur lesquels :
- la figure 1 est une illustration schématique de l'architecture d'un système de partage d'attributs personnels d'utilisateurs entre plusieurs fournisseurs de services,
- la figure 2 est un organigramme d'un procédé de partage d'attributs personnels mis en oeuvre dans le système de la figure 1,
- les figures 3 et 4 sont des illustrations schématiques de la circulation des flux d'informations entre différents équipements du système de la figure 1 dans deux cas particuliers de fonctionnement.

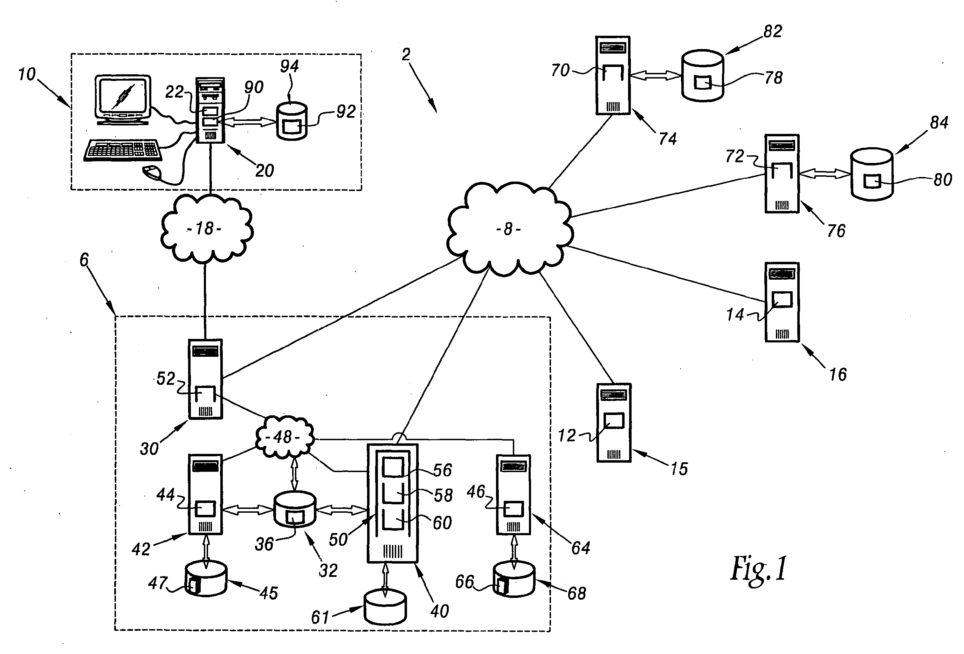

La figure 1 représente un système, désigné par la référence générale 2, de partage d'attributs personnels d'utilisateurs entre plusieurs fournisseurs électroniques de services en ligne.

Le système 2 comporte de nombreux terminaux d'utilisateurs susceptibles chacun de se connecter par l'intermédiaire d'un fournisseur d'accès Internet 6 à des fournisseurs de services par l'intermédiaire de la toile d'araignée mondiale 8.

La toile d'araignée mondiale 8 est, ici, simplement appelée réseau Internet. Ce réseau est un réseau à commutation de paquets.

Pour simplifier la figure 1, seul un terminal d'utilisateur 10 et deux fournisseurs de services 12 et 14 sont représentés.

Le terminal 10 est raccordé au fournisseur d'accès Internet 6 par l'intermédiaire d'un réseau 18 de transmission d'informations. Ce réseau 18 est, par exemple, un réseau téléphonique à commutation de circuits, un réseau de téléphonie mobile ou un réseau local type Intranet.

Le terminal 10 est apte à naviguer sur le réseau 8. A cet effet, il est, par exemple, formé d'un ordinateur conventionnel 20 équipé d'un écran et d'un clavier ainsi que d'un navigateur Internet 22 plus connu sous le terme anglais de « Browser ».

Les fournisseurs de services 12 et 14 sont destinés à effectuer des tâches en réponse à des demandes de l'utilisateur du terminal 10. Ces fournisseurs 12 et 14 sont ici des modules logiciels exécutés sur des serveurs Internet respectifs 15 et 16 raccordés au réseau 8.

Ces fournisseurs 12 et 14 sont tous les deux aptes à personnaliser la tâche rendue à l'utilisateur du terminal 10 en fonction d'attributs personnels de l'utilisateur de ce terminal. Par exemple, le fournisseur 12 ou 14 est un module logiciel propre à afficher sur le terminal 10 une page d'accueil HTML (Hypertext Mark-up Language) personnalisée en fonction des attributs personnels de l'utilisateur. Cette personnalisation consiste, par exemple, à indiquer le nom et le prénom de l'utilisateur et à appliquer une mise en page propre à cet utilisateur.

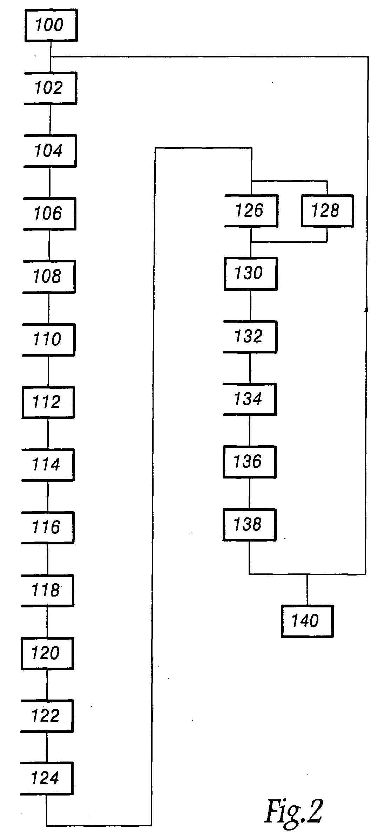

Les fonctionnalités de ces fournisseurs leur permettant d'obtenir les attributs personnels d'un utilisateur seront décrites plus en détail en regard de la figure 2.

Le fournisseur d'accès Internet 6 est apte à affecter dynamiquement une adresse réseau au poste 10 pour que celui-ci puisse naviguer sur le réseau 8. Cette adresse réseau est typiquement une adresse IP (Internet Protocol).

Afin de permettre l'accès au réseau 8, il comporte notamment un serveur Proxy HTTP (Hyper Text Transfer Protocol) 30 et des moyens de stockage d'informations tels qu'une mémoire 32.

Le serveur Proxy 30 est placé en coupure de flux entre le poste 10 et le réseau 8. Par coupure de flux on désigne ici le fait que l'ensemble des flux d'informations HTTP échangés entre le terminal 10 et le réseau 8 passe par l'intermédiaire du serveur Proxy 30. Ainsi, le serveur Proxy 30 voit passer l'ensemble des requêtes et des réponses HTTP émises par le terminal 10 ou à destination du terminal 10.

La mémoire 32 contient notamment une base de données 36 associant à chaque adresse IP dynamiquement affectée à un terminal d'utilisateur, un identifiant de cet utilisateur.

Dans le mode de réalisation de la figure 1, le fournisseur d'accès Internet comprend également un serveur iCAP (Internet Content Adaptation Protocol) 40, un serveur informatique 42 sur lequel est exécuté un module 44 de choix et un fournisseur électronique d'attributs 46.

Ces différents éléments du fournisseur d'accès Internet 6 sont raccordés les uns aux autres par l'intermédiaire d'un réseau local 48 de transmission d'informations.

Le module de choix 44 est raccordé à une mémoire 45 contenant une base de données 47. Cette base de données 47 associe à chaque identifiant d'utilisateur l'adresse d'un ou de plusieurs fournisseurs d'attributs susceptibles de fournir la valeur d'au moins un attribut pour cet utilisateur. Ce module de choix est connu sous l'expression anglaise « discovery service » dans les recommandations « Liberty Alliance ».

Le serveur 40 implémente un service 50 de partage d'attributs personnels. Le service 50 est, par exemple, un programme d'ordinateur. Ce service 50 est apte à traiter des requêtes ou des réponses HTTP interceptées par le serveur Proxy 30. A cet effet, le serveur Proxy 30 comprend un client iCAP 52 équipé d'une interface iCAP comportant un connecteur permettant de le raccorder au serveur 40 par l'intermédiaire du réseau 48. Ce client iCAP est apte à communiquer avec le serveur 40 en utilisant le protocole iCAP. Le protocole iCAP est un protocole normalisé par l'organisme IETF (Internet Engineering Task Force) pour la transformation systématique de contenus sur Internet. Plus précisément, le client iCAP 52 permet au serveur Proxy 30 à la suite de l'interception de requêtes ou de réponses http, d'effectuer des traitements sur ces requêtes ou réponses HTTP présentes dans le flux HTTP d'informations échangées entre le terminal 10 et le réseau 8 en fonction de règles prédéterminées. Ici, ces règles sont configurées de manière à ce que seules les requêtes et réponses HTTP nécessaires pour la mise en oeuvre du procédé de la figure 2 soient interceptées et transmises au service 50.

Le service 50 est apte à traiter les requêtes ou réponses HTTP interceptées pour les traiter en lieu et place du terminal 10 ou encore pour les modifier avant de les réinsérer dans le flux HTTP d'informations échangées entre le terminal 10 et le réseau 8. Les fonctionnalités du service 50 seront décrites plus en détail en regard de la figure 2. Ici, on indique simplement que ce service 50 comporte essentiellement :
- un module 56 d'insertions d'items dans des requêtes de connexion à des fournisseurs de services, ces item indiquant qu'un procédé de partage d'attributs peut être mis en oeuvre,
- un module 58 de partage propre à fournir à un fournisseur de services les attributs personnels demandés, lorsque ces attributs sont susceptibles d'être obtenus auprès du fournisseur 46 ou dans un autre fournisseur électronique raccordé au réseau 8, et
- un module 60 de terminal propre à fournir à un fournisseur de services les attributs personnels demandés, lorsque ceux-ci sont obtenus auprès d'un terminal d'utilisateur.

Le serveur 40 est apte à communiquer directement avec l'un quelconque des fournisseurs de services, par l'intermédiaire du réseau 8 en utilisant le protocole HTTP.

De préférence le serveur 40 est un calculateur électronique programmable conventionnel apte à exécuter des instructions enregistrées sur un support 61 d'enregistrement d'informations. Ici, le support 61 comporte des instructions pour l'exécution des étapes du procédé de la figure 2 réalisées par le service 50.

Le fournisseur 46 est un module logiciel implémenté sur un serveur informatique 64 sur lequel il s'exécute.

Le fournisseur 46 est apte à répondre à une requête de demande d'attributs en sélectionnant dans une base de données 66, la valeur des attributs demandés, en fonction d'un identifiant d'utilisateur. La base de données 66 est enregistrée dans une mémoire 68 raccordée au fournisseur 46.

Le système 2 comporte également deux autres fournisseurs d'attributs 70 et 72. Ces fournisseurs 70 et 72 sont également des modules logiciels implémentés sur des serveurs informatiques 74, 76 raccordés au service 50, par l'intermédiaire du réseau 8. Les fournisseurs 70, 72 sont, par exemple, identiques au fournisseur 46. Les fournisseurs 70, 72 sont raccordés à des bases de données respectives 78 et 80, contenus dans des mémoires respectives 82 et 84. Les bases de données 78 et 80 sont, par exemple, structurellement identiques à la base de données 66 et diffèrent de cette base de données 66 uniquement par leur contenu.

Enfin, ici, un fournisseur 90 d'attributs est également implémenté, dans le terminal 10. Une base de données 92 contenant des attributs d'un utilisateur du terminal 10 est enregistrée dans une mémoire 94 du terminal 10.

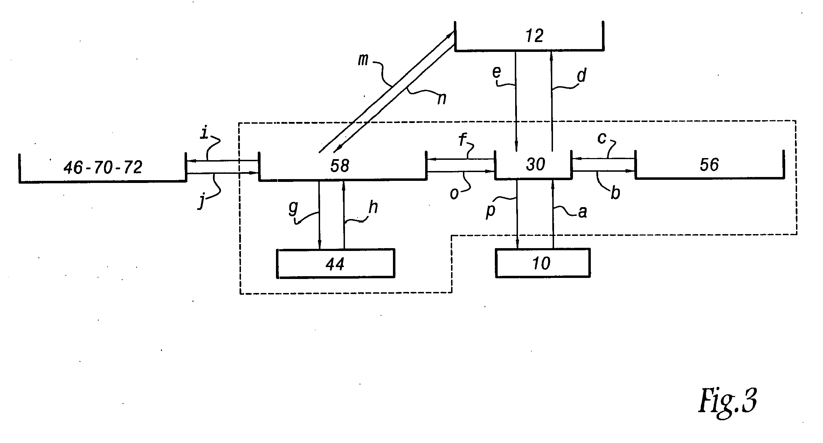

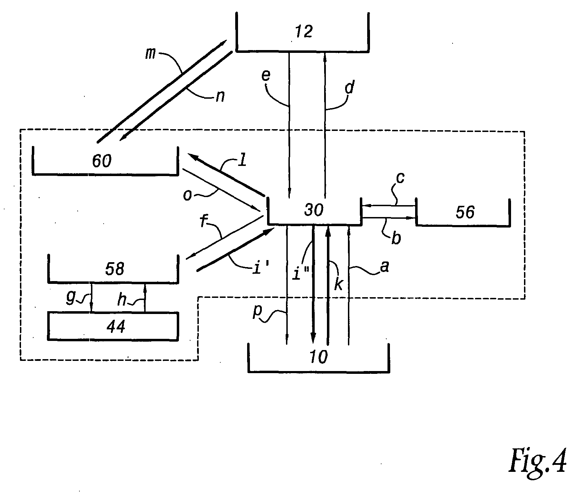

Le fonctionnement du système 2 va maintenant être décrit en regard du procédé de la figure 2 et des flux d'informations illustrés sur les figures 3 et 4.

Sur les figures 3 et 4, les flux d'informations entre les différents éléments du système 2 sont représentés par des flèches orientées. L'origine de chaque flèche part de l'élément qui émet l'information, tandis que l'extrémité de la flèche pointe sur l'élément qui reçoit l'information. Sur les figures 3 et 4, les éléments du système 2 déjà décrits en regard de la figure 1 portent les mêmes références numériques.

Les flèches sur les figures 3 et 4 sont référencées à l'aide des lettres a à p. Dans la suite de la description, on indique entre parenthèses pour chaque étape de l'organigramme de la figure 2 la flèche correspondante sur la figure 3 et/ou 4.

Initialement, le terminal 10 se connecte, lors d'une étape 100, au réseau 8 par l'intermédiaire du fournisseur d'accès Internet 6. Lors de cette étape 100, le fournisseur d'accès Internet 6 affecte dynamiquement une adresse IP au terminal 10 pour que celui-ci puisse naviguer sur le réseau 8.

Ensuite, le terminal 10 envoie, lors d'une étape 102, une requête HTTP de connexion à une page HTML quelconque d'un fournisseur de services (flèche a). Dans la suite de cette description, on suppose que le fournisseur de services contacté est le fournisseur 12.

Cette requête HTTP de connexion, après avoir traversé le réseau 18, est interceptée, lors d'une étape 104, par le serveur Proxy 30. Plus précisément, lors de cette étape 104, la requête de connexion est interceptée par le client iCAP 52 qui la redirige automatiquement vers le service 50 par l'intermédiaire du réseau 48 (flèche b).

Le module 56 insert alors, lors d'une étape 106, un entête dans la requête HTTP de connexion, contenant un item indiquant le support d'un service de partage d'attributs. De préférence, cet item comporte également la liste des attributs disponibles pour un utilisateur.

Lors d'une étape 108, la requête HTTP de connexion ainsi modifiée est envoyée au client iCAP 52 (flèche c) puis transmise au fournisseur 12 (flèche d).

En réponse à cette requête HTTP modifiée de connexion, le fournisseur 12 émet, lors d'une étape 110, une requête de demande d'attributs (flèche e) adressée au terminal 10. De préférence, cette requête de demande d'attributs contient un identifiant du fournisseur 12.

Lors d'une étape 112, cette requête de demande d'attributs est interceptée par le client iCAP 52 et redirigée automatiquement vers le module de partage 58 (flèche f).

Le module 58 identifie, lors d'une étape 114, l'utilisateur à partir de l'adresse IP du destinataire contenue dans la requête HTTP interceptée lors de l'étape 112 et grâce à la base de données 36.

Ensuite, le module 58 interroge, lors d'une étape 116, le module de choix 44 pour connaître l'adresse du fournisseur d'attributs à contacter pour obtenir les attributs personnels requis par le serveur 12 (flèche g). Lors de cette interrogation, le module 58 fourni au module 44 un identifiant de l'utilisateur ainsi que la liste des attributs personnels requis et, éventuellement, un identifiant du fournisseur ayant émis cette requête.

Lors d'une étape 118, le module 44 sélectionne, parmi l'ensemble des fournisseurs d'attributs disponibles, celui qui est susceptible de fournir les attributs requis par le serveur 12. A cet effet, le module 44 sélectionne dans la base de données 47 le fournisseur d'attributs approprié en fonction de l'identifiant de l'utilisateur et de la liste d'attributs requis. L'identifiant du fournisseur est, par exemple, utilisé pour limiter le nombre de fournisseurs d'attributs susceptibles d'être utilisés pour répondre à la requête du fournisseur 12 ou pour savoir si ce fournisseur de service est autorisé à requérir des attributs personnels auprès de ces fournisseurs d'attributs.

Une fois le fournisseur d'attributs choisi, lors d'une étape 120, le module 44 renvoie l'adresse de ce fournisseur d'attributs au module 58 (flèche h).

Le module 58 adresse alors une requête HTTP de fourniture d'attributs au fournisseur d'attributs sélectionné par le module de choix 44, lors d'une étape 122 (figure 3 : flèche i). La requête HTTP de fourniture d'attributs contient en outre un identifiant de l'utilisateur et une liste des attributs personnels requis par le fournisseur 12. Si le fournisseur d'attributs sélectionné est le fournisseur 46, le module 58 envoie la requête HTTP de fourniture d'attributs par l'intermédiaire du réseau local 48.

Dans le cas où le fournisseur d'attributs sélectionné est le fournisseur 70 ou 72, alors le module 58 établit une nouvelle connexion HTTP avec le fournisseur 70 ou 72 pour envoyer cette requête de fourniture d'attributs par l'intermédiaire du réseau 8.

Enfin, si le fournisseur d'attributs sélectionné est le fournisseur 90, alors la requête HTTP de fourniture d'attributs est transmise au client iCAP 52 (figure 4 : flèche i') qui l'insert dans le flux HTTP d'informations transmis entre le fournisseur 12 et le terminal 10 (figure 4 : flèche i''). Ainsi, sur la figure 4, le flux i passe par l'intermédiaire du serveur Proxy 30 et il n'est pas obligatoire d'établir une nouvelle connexion http avec le terminal 10.

En réponse à la requête de fourniture d'attributs reçue, si le fournisseur d'attributs sélectionné est l'un des fournisseurs 46, 70 et 72, le fournisseur d'attributs envoie, lors d'une étape 124, les attributs requis au module 58 (figure 3 : flèche j) dans une réponse HTTP.

Si le fournisseur d'attributs sélectionné est le fournisseur 90, le fournisseur 90 envoie les attributs requis au module 60 en insérant ceux-ci dans une réponse HTTP destinée au fournisseur 12 (figure 4 : flèche k). Cette réponse est alors interceptée par le serveur Proxy 30 et redirigée automatiquement vers le module 60 (figure 4 : flèche 1).

Le module 58 ou 60 ayant reçu les attributs requis, les envoie, lors d'une étape 126, au fournisseur 12 en utilisant à cet effet une connexion HTTP directement établie entre le serveur 40 et le fournisseur 12 (flèche m).

En parallèle, lors d'une étape 128, les flux d'informations j et m ou l et m sont enregistrés par le module 58 et associés à l'identifiant du fournisseur de services ayant requis ces attributs personnels.

Lors d'une étape 130, le fournisseur 12 personnalise les tâches qu'il doit effectuer en fonction des attributs personnels envoyés lors de l'étape 126. Par exemple, il personnalise la page d'accueil du site Internet.

La page d'accueil personnalisée est alors transmise, lors d'une étape 132, au module 58 ou 60 en réponse à la requête HTTP transmise lors de l'étape 126 (flèche n). La réponse est transmise au module 58 ou 60 qui a réalisé l'étape 126.

La réponse reçue par le service 50 est alors transmise, lors d'une étape 134, au client iCAP 52, par l'intermédiaire du réseau local 48 (flèche o).

Le client iCAP 52 insert alors cette réponse dans le flux HTTP entre le fournisseur 12 et le terminal 10, lors d'une étape 136 (flèche p). La réponse est donc transmise au terminal 10.

Ensuite, lors d'une étape 138, le reste des échanges d'informations entre le terminal 10 et le fournisseur 12 se fait normalement sans qu'aucune requête ou réponse HTTP ne soit interceptée et transmise au service 50.

Lorsque le terminal 10 contacte un autre fournisseur de services, tel que, par exemple, le fournisseur 14 ou une autre page HTML du même fournisseur de services qui requiert des attributs, les étapes 102 à 138 sont réitérées.

A intervalle régulier, le fournisseur d'accès Internet 6 facture, lors d'une étape 140, la mise en oeuvre du procédé de partage d'attributs aux fournisseurs de services en établissant le prix en fonction, par exemple, des flux j, m ou l, m mémorisés.

De nombreux autres modes de réalisation du système 2 sont possibles. Par exemple, le module de choix 44 est, en variante, implémenté dans un serveur informatique raccordé au fournisseur d'accès Internet 6, par l'intermédiaire du réseau 8. Dans cette variante, de préférence, les échanges d'informations entre le fournisseur d'accès Internet et le module de choix sont cryptés, soit, par exemple, avec une clé propre au fournisseur de services ayant requis les attributs personnels, soit à l'aide d'une clé propre au module de partage.

En variante, aucun fournisseur d'attributs n'est implémenté dans les terminaux d'utilisateurs. Ceci permet d'accroître la sécurité du procédé, car les attributs personnels ne sont jamais transmis sur le réseau 18.

Le fournisseur d'accès Internet 6 ne comporte pas nécessairement un fournisseur d'attributs.

Il est également possible d'implémenter le fournisseur d'attributs dans un autre terminal d'utilisateur que celui utilisé par l'utilisateur. Dans cette variante, le module de partage contacte cet autre terminal d'utilisateur en lui envoyant, par exemple, un message SMS (Short Message Service) contenant une URL (Uniform Resource Locators). Le fournisseur d'attributs ne fournit alors les attributs requis que si l'URL transmise est activée par un utilisateur de cet autre terminal. Une telle variante est utile lorsque un attribut personnel correspond à l'emploi du temps ou au calendrier d'un contact de l'utilisateur connecté au fournisseur de services.

Pour simplifier l'architecture matérielle du système 2, le service 50 peut être implémenté dans le serveur Proxy 30. De même, le module de choix 44 et le fournisseur 46 peuvent être implémentés dans un même serveur informatique. Le module de choix 44 et le service 50 de partage d'attributs ou le module de partage 58 peuvent aussi être implémentés dans un même serveur informatique commun.

Un fournisseur de services peut envoyer une seule requête de demande d'attributs personnels qui donne lieu à l'interrogation de plusieurs fournisseurs d'attributs, si les attributs requis ne sont pas tous disponibles auprès du même fournisseur d'attributs. Dans ce cas, le module de choix 44 renvoie, lors de l'étape 120, plusieurs adresses de fournisseurs d'attributs au module de partage 58. Le module de partage 58 adresse ensuite, lors de l'étape 122, une requête de fourniture d'attributs à chacun des fournisseurs d'attributs sélectionnés. Les fournisseurs d'attributs interrogés envoient, lors de l'étape 124, les attributs requis au module 58 qui les regroupe dans une seule réponse envoyée au fournisseur de services.

Ici, l'étape 130 a été décrite dans le cas de la personnalisation du contenu d'une page HTML avec les attributs personnels de l'utilisateur. En variante, la personnalisation du service rendu n'est pas visible sur une page HTML mais consiste à modifier le traitement d'informations réalisé par le fournisseur de services en fonction des attributs personnels reçus.

En variante, le module de partage interroge le module de choix avant même que le fournisseur de services ait émis une requête de demande d'attributs. Par exemple, le module de partage interroge le module de choix lors de la connexion du terminal d'utilisateur au réseau 8.

Enfin, en variante, le serveur Proxy contenu dans le fournisseur d'accès Internet est raccordé aux autres éléments du fournisseur d'accès Internet par l'intermédiaire du réseau 8.

Dans un mode de fonctionnement simplifié, le module de choix sélectionne les fournisseurs d'attributs uniquement en fonction de l'identifiant de l'utilisateur reçu.

La description ci-dessus a été établie dans le cas particulier où le réseau 8 est la toile d'araignée mondiale. Toutefois, le réseau 8 peut être tout autre type de réseau grande distance basé sur des technologies filaire, radio ou autres. Par exemple, le réseau 8 peut être un réseau WAP (Wireless Application Protocol).

## Revendications

1. Procédé de partage d'attributs personnels d'un utilisateur entre plusieurs fournisseurs électroniques (12, 14) de services en ligne, dans lequel :
d) en réponse à une requête de demande d'attributs personnels, émise par l'un quelconque des fournisseurs de services, un fournisseur d'attributs est interrogé (en 122) pour obtenir les attributs personnels requis par le fournisseur de services,
e) les attributs obtenus, lors de l'étape d), sont transmis (en 126) au fournisseur de services, et
f) le fournisseur de services personnalise le service rendu à l'utilisateur en fonction des attributs transmis,
**caractérisé en ce que**, avant les étapes d) à f)
a) le fournisseur de services (12, 14) contacté par l'utilisateur envoie (en 110) la requête de demande d'attributs personnels au terminal (10) de l'utilisateur par l'intermédiaire d'un réseau puis,
b) un serveur Proxy (30) d'un fournisseur d'accès Internet placé en coupure de flux entre le terminal et le réseau, intercepte (en 112) la requête de demande d'attributs adressée au terminal et la redirige automatiquement vers un fournisseur d'attributs, le fournisseur d'accès Internet étant celui qui a affecté dynamiquement une adresse Internet au terminal pour qu'il puisse naviguer sur le réseau.

2. Procédé selon la revendication 1, dans lequel :
c) un module (44) de choix sélectionne automatiquement (en 118) un fournisseur électronique (70, 72, 46, 90) d'attributs parmi plusieurs fournisseurs d'attributs possibles en fonction d'un identifiant de l'utilisateur, chaque fournisseur d'attributs étant adapté pour fournir des attributs personnels d'utilisateurs préenregistrés,
- lors de l'étape d) le fournisseur d'attributs interrogé est celui sélectionné lors de l'étape c), et
- lors de l'étape b) la requête de demande d'attributs interceptée est d'abord redirigée automatiquement vers le module de choix avant d'être transmise au fournisseur d'attributs sélectionné par ce module de choix.

3. Procédé selon la revendication 2, **caractérisé en ce que** lors de l'étape b) :
- le serveur Proxy (30) redirige (en 112) d'abord la requête de demande d'attributs vers un module de partage (58) commun à l'ensemble des fournisseurs de services, puis
- le module de partage interroge (en 116) le module de choix (44) à la place du fournisseur de services ayant émis la requête de demande d'attributs personnels.

4. Procédé selon l'une quelconque des revendications précédentes, **caractérisé en ce qu'**avant l'étape a) :
- un module (56) d'insertion modifie (en 106) automatiquement une requête de connexion du terminal au fournisseur de services pour y insérer un item indiquant qu'un procédé de partage d'attributs est susceptible d'être mis en oeuvre, la requête de connexion modifiée étant ensuite transmise au fournisseur de services, et
- en réponse à cette requête de connexion modifiée, le fournisseur de services procède automatiquement à l'étape a).

5. Procédé selon l'une quelconque des revendications 2 à 4, **caractérisé en ce que** les fournisseurs d'attributs interrogés sont uniquement implémentés dans des serveurs respectifs de fourniture d'attributs indépendants des terminaux d'utilisateur et raccordés au module de choix par un réseau local interne au fournisseur d'accès Internet ou par la toile d'araignée mondiale, et
- **en ce que** lors de l'étape d), le fournisseur d'attributs sélectionné est interrogé (en 122) par un module (58) de partage implémenté dans un serveur du fournisseur d'accès Internet, et
- **en ce que** lors de l'étape e), ce module de partage transmet les attributs obtenus au fournisseur de services par l'intermédiaire de la toile d'araignée mondiale.

6. Procédé selon l'une quelconque des revendications 1 à 4, **caractérisé en ce que** le fournisseur d'attributs sélectionné est implémenté dans un terminal d'utilisateur, et
- **en ce que** lors de l'étape d), un module (58) de partage interroge (en 122) ce fournisseur d'attributs en insérant une requête d'interrogation dans un flux d'informations établi entre ce terminal et le fournisseur de services en utilisant, à cet effet, le serveur Proxy, et
- **en ce que** lors de l'étape e), un module (60) de terminal intercepte la réponse du fournisseur d'attributs dans le flux d'informations établi entre le terminal et le fournisseur de services en utilisant le serveur Proxy et transmet la réponse interceptée au fournisseur de services, le module de partage et le module de terminal étant implémentés dans le fournisseur d'accès Internet.

7. Système de partage automatique d'attributs personnels d'un utilisateur entre plusieurs fournisseurs électroniques de services en ligne, ce système comportant :
- au moins un fournisseur (46, 70, 72, 90) d'attributs aptes à fournir des attributs personnels d'utilisateurs préenregistrés en réponse à une requête de demande d'attributs personnels émise par l'un quelconque des fournisseurs de services,
- des fournisseurs (12, 14) de services aptes à personnaliser le service rendu à l'utilisateur en fonction des attributs personnels transmis, et
- un fournisseur (6) d'accès Internet apte à affecter dynamiquement une adresse Internet à un terminal d'utilisateur pour qu'il puisse naviguer sur un réseau, ce fournisseur d'accès Internet comportant un serveur Proxy (30) placé en coupure de flux entre le terminal d'utilisateur et le réseau,
**caractérisé en ce que** :
- les fournisseurs (12, 14) de services sont aptes à envoyer la requête de demande d'attributs personnels au terminal de l'utilisateur par l'intermédiaire du réseau, et
- le serveur Proxy est apte à intercepter la requête de demande d'attributs adressée au terminal et à la rediriger automatiquement vers l'un des fournisseurs d'attributs.

8. Système selon la revendication 7, dans lequel :
- le système comporte un module (44) de choix apte à sélectionner un fournisseur électronique d'attributs parmi plusieurs fournisseurs d'attributs possibles en fonction d'un identifiant de l'utilisateur, et
- le serveur Proxy est apte à rediriger automatiquement vers le module de choix la requête de demande d'attributs interceptée avant que celle-ci soit transmise vers le fournisseur d'attributs sélectionné par le module de choix.

9. Système selon la revendication 8, **caractérisé en ce que** :
- le serveur Proxy (30) est apte à rediriger d'abord la requête de demande d'attributs vers un module de partage (58) commun à l'ensemble des fournisseurs de services,
- le fournisseur d'accès Internet comporte le module de partage (58), ce module de partage étant apte à interroger le module de choix (44) à la place du fournisseur de services ayant émis la requête de demande d'attributs personnels.

10. Fournisseur d'accès Internet apte à être mis en oeuvre dans un procédé de partage d'attributs personnels conforme à l'une quelconque des revendications 1 à 6, ce fournisseur d'accès Internet étant apte à affecter dynamiquement une adresse Internet au terminal d'utilisateur pour qu'il puisse naviguer sur le réseau, ce fournisseur d'accès Internet comportant un serveur Proxy (30) placé en coupure de flux entre le terminal d'utilisateur et le réseau,
**caractérisé en ce que** le serveur Proxy est apte à intercepter la requête de demande d'attributs adressée au terminal et à la rediriger automatiquement vers un fournisseur d'attributs.

11. Module (58) de partage apte à être mis en oeuvre dans un procédé de partage d'attributs conforme à l'une quelconque des revendications 5 à 6, **caractérisé en ce que** le module de partage est apte :
- à interroger le module de choix (44) à la place du fournisseur de services ayant émis la requête de demande d'attributs personnels,
- à interroger le fournisseur d'attributs sélectionné par le module de choix pour obtenir les attributs personnels requis, et
- à transmettre les attributs obtenus au fournisseur de services par l'intermédiaire de la toile d'araignée mondiale.

12. Module (56) d'insertion apte à être mis en oeuvre dans un procédé de partage d'attributs conforme à la revendication 4, **caractérisé en ce que** le module d'insertion est apte à modifier automatiquement une requête de connexion du terminal au fournisseur de services pour y insérer un item indiquant qu'un procédé de partage d'attributs est susceptible d'être mis en oeuvre, la requête de connexion modifiée étant ensuite transmise au fournisseur de services.

13. Module (60) de terminal apte à être mis en oeuvre dans un procédé de partage d'attributs conforme à la revendication 6, **caractérisé en ce que** ce module de terminal est apte à intercepter la réponse du fournisseur d'attributs dans le flux d'informations établi entre le terminal et le fournisseur de services en utilisant le serveur Proxy et à transmettre la réponse interceptée au fournisseur de services.

14. Serveur Proxy (30) d'un fournisseur d'accès Internet apte à être mis en oeuvre dans un procédé de partage d'attributs personnels conforme à l'une quelconque des revendications 1 à 6, **caractérisé en ce que** le serveur Proxy est placé en coupure de flux entre le terminal d'utilisateur et la toile d'araignée mondiale, et **en ce qu'**il est apte à intercepter la requête de demande d'attributs adressée au terminal et à la rediriger automatiquement vers le fournisseur d'attributs.

15. Fournisseur de services (12, 14) apte à être mis en oeuvre dans un procédé de partage d'attributs personnels, conforme à l'une quelconque des revendications 1 à 6, **caractérisé en ce que** le fournisseur de services est apte à envoyer la requête de demande d'attributs personnels au terminal de l'utilisateur par l'intermédiaire de la toile d'araignée mondiale.

16. Programme d'ordinateur apte à être mis en oeuvre dans un module (58) de partage, **caractérisé en ce qu'**il comporte des instructions pour la mise en oeuvre des étapes d) et e) d'un procédé de partage d'attributs personnels conforme à la revendication 5 ou 6, lorsque ces instructions sont exécutées par ledit module (58) de partage.
